# EUROPÄISCHE PATENTANMELDUNG

(11) **EP 2 907 415 A1**
(43) Veröffentlichungstag der Anmeldung: **19.08.2015**
(21) Anmeldenummer: 15000395.2
(22) Anmeldetag: 11.02.2015
(51) Int. Cl.: A47F 1/12

(54) **Laufkörper für eine auf Waren wirkende Drückeinrichtung eines Rutschregales sowie Drückeinrichtung**

(30) Priorität: 12.02.2014 DE 102014101755
(71) Anmelder: Nilsson, Rickard, 65558 Balduinstein (DE)
(72) Erfinder: Nilsson, Rickard, 65558 Balduinstein (DE)
(74) Vertreter: Mill, Andreas

(57) **Zusammenfassung**

Die Erfindung betrifft einen Laufkörper (1; 1') für eine auf Waren wirkende Drückeinrichtung (100; 100') eines Rutschregales (500) mit einer vorzugsweise gegen einen Fachboden (510) des Rutschregales (500) in Wirkstellung bringbaren Lauffläche (2), welche durch die Mantelfläche eines Gusseisen enthaltenden oder aus Gusseisen bestehenden Grundkörpers (3; 3') gebildet ist. Die Erfindung betrifft ferner eine Drückeinrichtung (100; 100') für ein Rutschregal (500), welche zum Aufbringen einer Druckkraft auf Waren (600) des Rutschregales (500) dient, mit wenigstens einem Laufkörper (1; 1'). Weiterhin betrifft die Erfindung ein Rutschregal (500) mit wenigstens einer Drückeinrichtung (100; 100').

## Beschreibung

Die Erfindung betrifft einen Laufkörper für eine auf Waren wirkende Drückeinrichtung eines Rutschregales. Die Erfindung betrifft ferner eine Drückeinrichtung sowie ein Rutschregal.

Laufkörper der hier angesprochenen Art sind Bestandteil einer Drückeinrichtung, welche beispielsweise an einem Rutschregal zum Einsatz kommt. Die Drückeinrichtung wirkt mit einer Druckkraft auf die in einem Rutschregal in einer Reihe hintereinander liegend angeordneten Waren, um bei Entnahme einer vorderen Ware ein Nachrutschen der dahinterliegenden Waren zu bewirken. Dazu wird das Eigengewicht der Drückeinrichtung genutzt, welches eine auf die Waren wirkende Druckkraft bewirkt, wenn die Drückeinrichtung auf den geneigten Fachboden des Rutschregales aufgelegt ist.

Mittels der Laufkörper steht die Drückeinrichtung üblicherweise in Wirkkontakt mit dem geneigten Fachboden des Rutschregales. Insoweit dienen die Laufkörper der Reduzierung der Reibung, um bereits bei möglichst geringer Neigung des Rutschbodens eine Bewegung der Drückeinrichtung bzw. eine auf die Waren wirkende relativ hohe Druckkraft zu erreichen.

Heutzutage ist man bei der Weiterentwicklung von Rutschregalen bestrebt, bei möglichst gleichbleibender Funktionalität die Herstellungskosten zu reduzieren, um dadurch dem Endkunden ein besonders attraktives Produkt anbieten zu können.

Einer Ausführungsform der Erfindung liegt daher die Aufgabe zugrunde, einen Laufkörper für eine auf Waren wirkende Drückeinrichtung eines Rutschregales bereitzustellen, welcher kostengünstig hergestellt werden kann. Ferner soll eine Drückeinrichtung bereitgestellt werden, welche für den Einsatz eines solchen Laufkörpers geeignet ist. Auch soll eine einfach herzustellende Drückeinrichtung bereitgestellt werden. Darüber hinaus soll ein dafür geeignetes Rutschregal angegeben werden.

Diese Aufgabe wird mit einem Laufkörper gelöst, welcher die Merkmale des Anspruches 1 aufweist. Zur Lösung der Aufgabe ist ferner eine Drückeinrichtung mit den Merkmalen des Anspruches 11, eine Drückeinrichtung mit den Merkmalen des Anspruches 12 sowie ein Rutschregal mit den Merkmalen des Anspruches 15 vorgeschlagen. Weitere Ausgestaltungen der Erfindung ergeben sich aus den Unteransprüchen, der nachfolgenden Beschreibung und den Figuren.

Nach einer Ausführungsform der Erfindung zeichnet sich ein Laufkörper für eine auf Waren wirkende Drückeinrichtung eines Rutschegales unter anderem durch eine vorzugsweise gegen einen Fachboden des Rutschregales in Wirkstellung bringbare Lauffläche aus, welche an der Mantelfläche eines Gusseisen enthaltenden oder aus Gusseisen bestehenden Gusskörpers angeordnet ist.

Dadurch ist in technisch einfacher Weise erreicht, dass der Laufkörper ein relativ großes Eigengewicht aufweist und sich kostengünstig realisieren lässt. Denn der Gusskörper weist beispielsweise gegenüber einem Kunststoffkörper eine mehrfach höhere Dichte auf. Zugleich ist der Gusskörper aufgrund seines Materials in der Herstellung relativ kostengünstig. Dies vor allem dadurch, weil der Gusskörper ein Urformteil ist, welches durch Gießen erzeugt ist.

Mit Vorteil besteht der Gusskörper aus Grauguss oder weist ein solches Material auf. Dadurch lässt sich der Gusskörper besonders kostengünstig realisieren.

Beispielsweise kann der Gusskörper aus Grauguss mit Lamellengraphit und/oder aus Grauguss mit Kugelgraphit bestehen oder ein solches Material aufweisen. Denkbar ist es auch, dass der Gusskörper aus Temperguss und/oder vermiculargraphit-Guss besteht oder ein solches Material aufweist. Darüber hinaus kann der Gusskörper aus weißem Gusseisen bestehen oder aufweisen, welches Kohlenstoff als Carbit in Form von Zementit enthält.

Der Laufkörper ist dazu geeignet, als Rotationskörper in einer Drückeinrichtung für ein Rutschregal eingesetzt zu werden. In diesem Fall rollt der Rotationskörper auf einem Fachboden des Rutschregales ab, wenn die Drückeinrichtung eine Bewegung ausführt.

Der Laufkörper ist auch als Gleitkörper einsetzbar. In diesem Fall gleitet der Laufkörper beispielsweise auf dem Fachboden eines Rutschregales, wenn die Drückeinrichtung eine Bewegung ausführt.

Denkbar ist es ferner, dass der Laufkörper als Rotationskörper und Gleitkörper dient. In diesem Fall führt der Laufkörper eine kombinierte Rotations- und Gleitbewegung, beispielsweise auf einem Fachboden des Rutschregales aus, wenn die Drückeinrichtung eine Bewegung ausführt.

Nach einer Ausgestaltung der Erfindung ist es vorgesehen, dass die Lauffläche an der Mantelfläche des Gusskörpers ausgebildet ist. Beispielsweise kann die Lauffläche durch die Mantelfläche des Gusskörpers gebildet sein. Auch diese Maßnahme zielt auf eine kostengünstige Herstellung des Laufkörpers ab.

Nach einer anderen Ausgestaltung der Erfindung ist es vorgesehen, dass der Gusskörper eine Beschichtung aufweist, welche die Lauffläche bildet. Die Beschichtung sollte eine die Poren und/oder Einkerbungen bzw. vertiefungen des Gusskörpers verschließende Beschichtung sein. Dadurch lassen sich verbesserte Laufeigenschaften der Laufrolle, insbesondere verbesserte Roll- und/oder Gleiteigenschaften, erreichen. Ergänzend oder alternativ ist je nach Art der Beschichtung die Laufrolle, insbesondere die Lauffläche, korrosionsbeständiger bzw. korrosionsunempfindlicher.

In die gleiche Richtung zielt die Maßnahme, dass der Gusskörper mit einer Lackierung versehen ist, welche die Lauffläche bildet.

Auch zielt die Maßnahme auf diese Wirkungen ab, wonach der Gusskörper mit einer Imprägnierung, insbesondere mit einer wenigstens ein Polymer aufweisenden Imprägnierung, versehen ist, welche die Lauffläche bildet.

Die Beschichtung, Lackierung und/oder Imprägnierung kann mittels Streichen, Sprühen, Injizieren oder Tauchen aufgebracht werden.

Nach einer weiteren Ausgestaltung der Erfindung ist es vorgesehen, dass der Laufkörper zwei der Lagerung des Laufkörpers dienende, vorzugsweise nach außen stehende Materialabschnitte aufweist, welche mit ihrer Längsachse und/oder Drehachse koaxial bezüglich einer Mittelachse und/oder Drehachse des Laufkörpers angeordnet sind, wobei wenigstens einer der Materialabschnitte an dem Gusskörper angebunden ist. Dadurch ist der Laufkörper in technisch einfacher Weise an einem Träger montierbar, wobei durch die Materialabschnitte der Laufkörper an dem Träger drehfest oder drehbar gehalten sein kann.

Es bietet sich an, dass beide Materialabschnitte an dem Gusskörper angebunden sind. Auch bietet es sich an, dass wenigstens einer der Materialabschnitte oder beide Materialabschnitte an dem Gusskörper angeformt sind. Dadurch lassen sich die Materialabschnitte in technisch einfacher Weise realisieren.

Die der Lagerung dienenden Materialabschnitte können als zylinderförmige Vorsprünge, beispielsweise in Art eines Wellenabschnittes oder Achsabschnittes, ausgebildet sein, so dass der Laufkörper daran in einer Drehlagerung oder in einer drehfesten Lagerung an der Drückeinrichtung gehalten werden kann.

Alternativ kann es vorgesehen sein, dass der Gusskörper zwei beispielsweise stirnseitig angeordnete Anbindungsabschnitte aufweist, mittels welchen der Laufkörper koaxial bezüglich einer Mittelachse und/oder Drehachse des Laufkörpers an einem Träger lagerbar ist. Beispielsweise können die Anbindungsabschnitte durch eine Bohrung oder dergleichen Vertiefung gebildet sein, in welche ein Bolzen oder dergleichen Vorsprung unter Ausbildung der Lagerung an dem Träger einbringbar ist.

Eine weitere Ausgestaltung der Erfindung besteht darin, dass der Gusskörper im Wesentlichen zylinderförmig ausgebildet ist. Der Gusskörper liegt dadurch in einer geometrisch einfach zu realisierenden Form vor.

Auch kann es vorgesehen sein, dass der Gusskörper im Wesentlichen kugelförmig ausgebildet ist.

Weiterhin umfasst die Erfindung eine Gießform bzw. Gussform zur Herstellung des Gusskörpers eines Laufkörpers der vorstehend beschriebenen Art.

Darüber hinaus umfasst die Erfindung eine Drückeinrichtung für ein Rutschregal, welche zum Aufbringen einer Druckkraft auf Waren des Rutschregales dient, mit wenigstens einem Laufkörper der vorstehend beschriebenen Art. Mittels der von der Drückeinrichtung aufgebrachten Druckkraft wird ein Umfallen der Waren vermieden und ist ein Nachrutschen sichergestellt, wenn wenigstens eine der aufgereihten Waren entnommen wird.

Es bietet sich an, dass die Drückeinrichtung einen Träger oder eine Halterung aufweist, an welchem der Laufkörper der vorstehend beschriebenen Art drehbar oder drehfest gelagert ist.

Bevorzugt weist die Drückeinrichtung wenigstens ein Stützteil oder eine Stützfläche auf, welche in Anlage gegen eine Ware bringbar ist. Das Stützteil stützt die Ware und verhindert somit ein Umfallen. Zugleich ist über das Stützteil die von der Drückeinrichtung erzeugte Druckkraft auf die Ware zu übertragen.

Weiterhin umfasst die Erfindung eine Drückeinrichtung für ein Rutschregal, welche zum Aufbringen einer Druckkraft auf Ware des Rutschregales dient, mit einem Drückteil zum Übertragen der Druckkraft auf wenigstens eine Ware, wobei das Drückteil eine Vorderseite und eine Rückseite aufweist und mit der Vorderseite gegen die Ware in Wirkkontakt bringbar ist.

Die Drückeinrichtung kann eine Drückeinrichtung der vorstehend beschriebenen Art sein. Ebenso kann das Drückteil ein Stützteil der vorstehend beschriebenen Art sein.

Es ist vorgesehen, dass die Drückeinrichtung ein vorzugsweise gegen einen Fachboden eines Rutschregales gleitend in wirkstellung bringbares Gleitteil aufweist, welches an dem Drückteil angeordnet ist und sich von dem Drückteil in Richtung der Rückseite des Drückteiles erstreckt.

Dadurch ist die Drückeinrichtung in technisch einfacher Weise und mit wenig Aufwand zu realisieren, da anstelle eines aufwendigen und relativ teuren Laufkörpers, insbesondere Rollkörpers, das einfache Gleitteil genutzt wird, um bei Entnahme einer oder mehrerer Waren vom dem Fachboden bzw. Rutschboden ein Nachrutschen des Drückteiles zu begünstigen.

Indem das Gleitteil nach hinten von dem Drückteil weg steht, also das Gleitteil sich entgegengesetzt zu der Bewegungsrichtung erstreckt, in welche sich das Drückteil nach Entnahme einer oder mehrerer Waren bewegt, ist in technisch einfacher Weise vermieden, dass die Gleitbewegung des Drückteils durch etwaige auf dem Gleitteil aufliegender Waren gestört wird.

Das Gleitteil lässt sich einfach herstellen, wenn nach einer vorteilhaften Ausgestaltung der Erfindung das Gleitteil durch einen Materialabschnitt gebildet ist, der an dem Drückteil angeformt ist.

In diese Richtung zielt beispielsweise auch die Maßnahme, dass das Gleitteil durch Umformen eines Materialabschnittes des Drückteiles gebildet ist. Denkbar ist es, dass das Gleitteil durch Biegeumformen eines Materialabschnittes des Drückteils realisiert ist.

Bevorzugt sollte der das Gleitteil bildende Materialabschnitt eine Ebene bilden, welche winkelig, insbesondere im Wesentlichen rechtwinklig, zu einer durch die Vorderseite des Drückteils gebildeten Ebene liegt. Dadurch kann das Gleitteil optimal seine Gleitwirkung entfalten, wobei zugleich das Drückteil in einer optimalen Ausrichtung gegen die Ware drückt, insbesondere wenn die Ware eine quaderförmige Verpackung aufweist und mit einer Seite auf dem Fachboden aufliegt.

Es bietet sich an, dass das Drückteil und das Gleitteil aus einem gemeinsamen Blechteil gebildet sind. Das Blechteil kann aus Stahlblech, insbesondere galvanisiertem Stahlblech, bestehen. Es ist dadurch die Drückeinrichtung in technisch einfacher Weise herzustellen, da dazu Drückteil und Gleitteil in einfacher Weise durch Umformen zu realisieren sind.

Auch bietet es sich an, dass das Blechteil, insbesondere der das Gleitteil bildende Abschnitt des Blechteils, mit einer Antihaftbeschichtung und/oder einem Antihaftlack versehen ist. Dadurch ist die Gleiteigenschaft des Drückteils verbessert.

Das Drückteil kann als plattenförmiges Flächenelement ausgebildet sein. Für diesen Fall ist es denkbar, dass das Gleitteil durch das stirnseitige Ende des Drückteils gebildet ist, welches dem Fachboden zugewandt ist und welches gegen den Fachboden in Wirkstellung gebracht ist, wenn das Drückteil auf dem Fachboden aufliegt.

Bevorzugt ist an dem Drückteil eine Aufnahme angeordnet, an welcher wenigstens ein Gleit- und/oder Rollelement drehbar oder drehfest gelagert ist, insbesondere lagerbar ist. Die Aufnahme ist bevorzugt rückseitig an dem Drückteil angeordnet.

Die Aufnahme kann beispielsweise durch den Träger einer Drückeinrichtung der vorstehend beschriebenen Art gebildet sein. Auch kann das Gleit- und/oder Rollelement ein Laufkörper der vorstehend beschriebenen Art sein.

In technisch besonders einfacher Weise kann die Aufnahme realisiert werden, wenn die Aufnahme durch Umformen wenigstens eines, vorzugsweise zweier Materialabschnitte, des Drückteils gebildet ist, zwischen denen das Gleit- und/oder Rollelement drehbar oder drehfest gehalten ist.

Eine besondere Stabilität ist erreicht, wenn die Materialabschnitte als Begrenzung für das Gleitteil dienen oder das Gleitteil sich gegen die Materialabschnitte abstützt. Dadurch ist ein die Drückeinrichtung versteifender Verbund erreicht.

Es hat sich gezeigt, dass bei Entnahme einer oder mehrerer Waren vom dem Rutschboden die Drückeinrichtung eine optimale Nachführbewegung vollzieht, wenn die Drückeinrichtung das Gleitteil und zusätzlich zumindest ein Gleit- und/oder Rollelement aufweist. Das Gleit- und/oder Rollelement kann ein Laufkörper der vorstehend beschriebenen Art sein. Technisch einfach und kostengünstig ist die Drückeinrichtung zu realisieren, wenn die Drückeinrichtung neben dem Gleitteil nur ein einziges Gleit- und/oder Rollelement der vorstehend beschriebenen Art aufweist.

Die Erfindung umfasst darüber hinaus ein Rutschregal mit wenigstens einer Drückeinrichtung der vorstehend beschriebenen Art.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine mögliche Ausführungsform einer an einem Rutschregal angeordneten Drückeinrichtung in perspektivischer Darstellung,
- Fig. 2: eine mögliche Ausführungsform eines Laufkörpers für eine Drückeinrichtung gemäß der Figur 1 in Schnittdarstellung,
- Fig. 3: eine weitere mögliche Ausführungsform eines Laufkörpers für eine Drückeinrichtung gemäß der Figur 1 in Schnittdarstellung und
- Fig. 4: eine weitere mögliche Ausführungsform einer Drückeinrichtung in perspektivischer Darstellung.

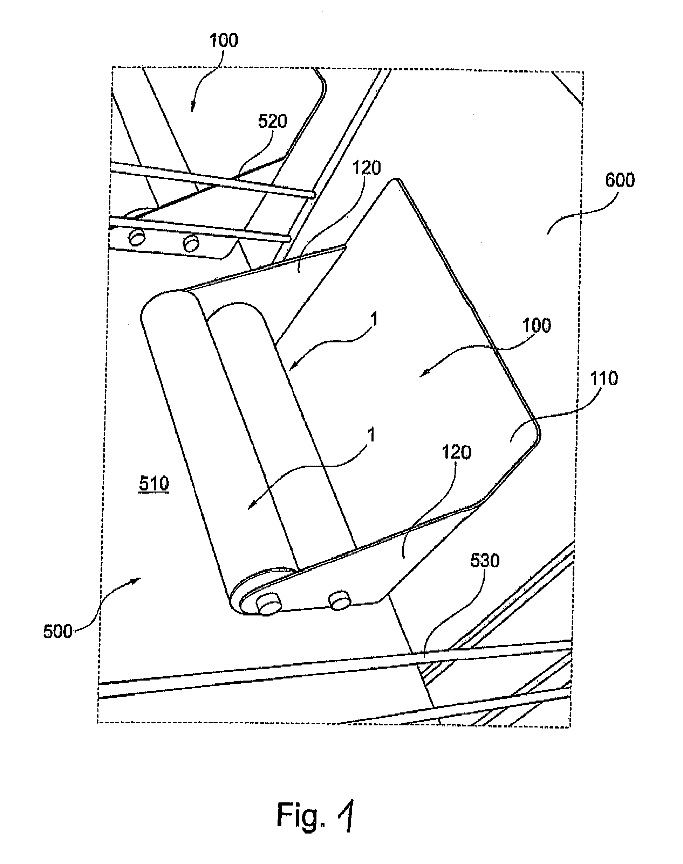

Figur 1 zeigt einen Ausschnitt eines Rutschregales 500, aus dem der Bereich eines Fachbodens 510 des Rutschregales 500 ersichtlich ist. Auf dem Fachboden 510 sind Waren 600 aufgestellt, welche in der Figur 1 lediglich ansatzweise angedeutet sind. Die Waren 600 sind in einer Reihe hintereinander liegend auf dem Fachboden 510 angeordnet, wobei die waren 600 durch seitlich angeordnete Fachteiler 520 und 530 in ihrer hintereinanderliegenden Reihenanordnung gehalten werden.

Figur 1 zeigt ferner eine Drückeinrichtung 100, welche am Ende der Reihe mit den Waren 600 auf dem Fachboden 510 angeordnet ist und mit einem Drückteil 110 gegen eine der Waren 600 in Anlage gebracht ist.

Bei dem Rutschregal 500 ist der Fachboden 510 als Rutschboden ausgebildet, indem der Fachboden 510 geneigt ausgerichtet ist. Der Bereich des Fachbodens 510, an welchem die Drückeinrichtung 100 sich befindet, ist der obenliegende Bereich, wobei die sich an die Drückeinrichtung 100 anschließenden Waren 600 in Richtung nach vorne unten auf den Fachboden 510 aufgestellt sind. Durch die Anordnung der Waren 600 und der Drückeinrichtung 100 auf dem Fachboden 510 wird durch das Eigengewicht der Drückeinrichtung 100 eine Druckkraft auf die Waren 600 ausgeübt, so dass ein Umfallen der Waren 600 vermieden ist.

Sofern eine oder mehrere der Waren 600 entnommen werden, kommt es zu einem Nachrutschen der in der Reihe darüberliegenden Waren in dem freigewordenen Zwischenraum. Dieses Nachrutschen wird durch die Drückeinrichtung 100 bewirkt, welche wenigstens einen, vorzugsweise zwei Laufkörper 1 aufweist. Die Laufkörper 1 sind an zwei Trägerelementen 120 der Drückeinrichtung 100 gelagert, welche zwischen sich die Laufkörper 1 aufnehmen. Die Trägerelemente 120 sind bevorzugt mit dem Drückteil 110 verbunden und bilden zusammen den Grundkörper der Drückeinrichtung 100.

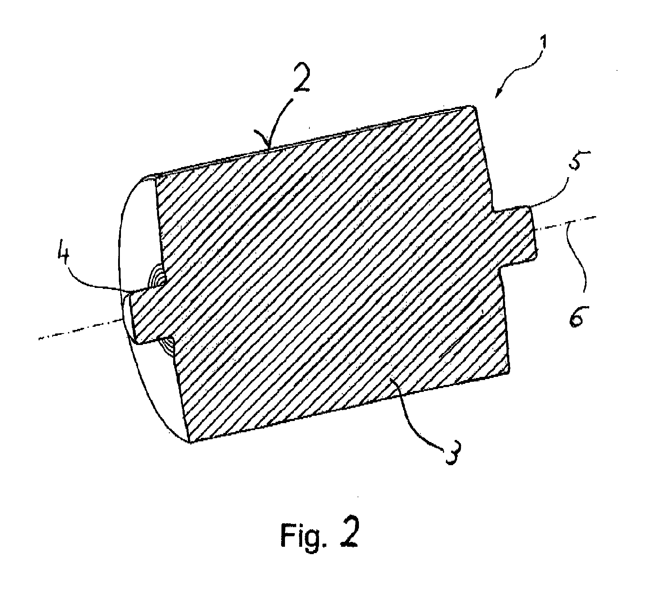

Figur 2 zeigt eine mögliche Ausführungsform des Laufkörpers 1 der Figur 1 in perspektivischer Darstellung als Längsschnitt. Der Laufkörper 1 weist eine gegen einen Fachboden, wie beispielsweise den Fachboden 510 des Rutschregales 500, in Anlage bringbare Lauffläche 2 auf, welche an der Mantelfläche eines Gusskörpers 3 ausgebildet ist, insbesondere durch die Mantelfläche des Gusskörpers 3 gebildet ist. Der Gusskörper 3 besteht im Wesentlichen aus Gusseisen oder weist zumindest Gusseisen auf. Beispielsweise kann der Gusskörper aus Grauguss bestehen oder Grauguss enthalten.

Der Laufkörper 1 mit seinem Gusskörper 3 ist im Wesentlichen zylinderförmig ausgebildet, wobei der Gusskörper 3 bevorzugt aus einem Vollmaterial gebildet ist.

Der Laufkörper 1 weist ferner stirnseitig jeweils einen in axialer Richtung nach außen stehenden Materialabschnitt 4 bzw. 5 auf, welcher mit seiner Mittelachse koaxial bezüglich der Drehachse 6 des Laufkörper 1 angeordnet ist. Die Drehachse 6 ist bevorzugt die Mittelachse bzw. Längsmittelachse des Laufkörper 1.

Die Materialabschnitte 4 und 5 weisen bevorzugt eine runde Querschnittsform auf und können beispielsweise als Wellenstumpf ausgebildet sein. An den Materialabschnitten 4 und 5 ist der Laufkörper 1 an der Drückeinrichtung 100, insbesondere den Trägerelementen 120 drehbar gelagert.

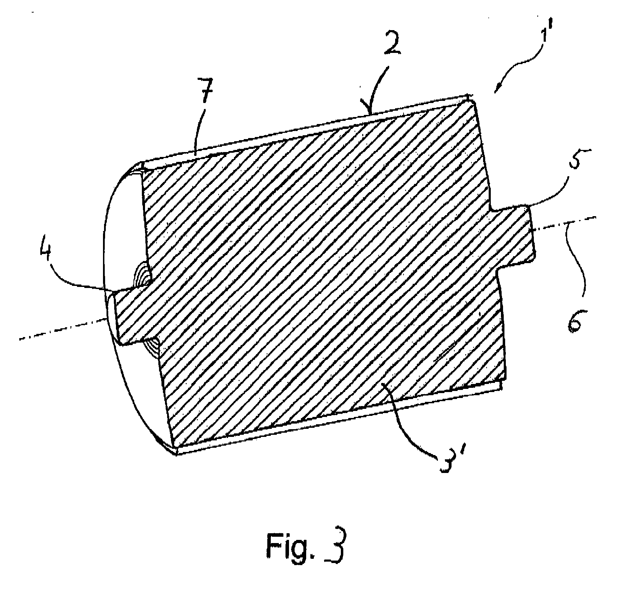

Figur 3 zeigt eine weitere mögliche Ausführungsform eines Laufkörpers 1' in perspektivischer Darstellung als Längsschnitt. Der Laufkörper 1' ist für eine Drückeinrichtung eines Rutschregales, insbesondere die Drückeinrichtung 100 gemäß der Figur 1, geeignet.

Bauteile und/oder Materialabschnitte des Laufkörpers 1' gemäß der Figur 3, welche mit Bauteilen und/oder Materialabschnitten des Laufkörpers 1 gemäß der Figur 2 identisch oder funktionsgleich sind, sind mit gleichen Bezugszeichen versehen; insoweit wird auf die Beschreibung zu dem Laufkörper 1 der Figur 2 verwiesen.

Der Laufkörper 1' gemäß der Figur 3 unterscheidet sich von dem Laufkörper 1 gemäß der Figur 2 unter anderem dadurch, dass die Lauffläche 2 an einer Schicht 7 ausgebildet ist, welche an der Mantelfläche eines Gusskörpers 3' ausgebildet ist. Der Gusskörper 3' kann der Gusskörper 3 gemäß der Figur 2 sein.

Die Schicht 7 ist bevorzugt derart ausgebildet, dass dadurch etwaige die Poren bzw. Vertiefungen auf der Mantelfläche des Gusskörpers 3' verschlossen sind. Die Schicht 7 kann durch eine Beschichtung, Lackierung und/oder Imprägnierung gebildet sein.

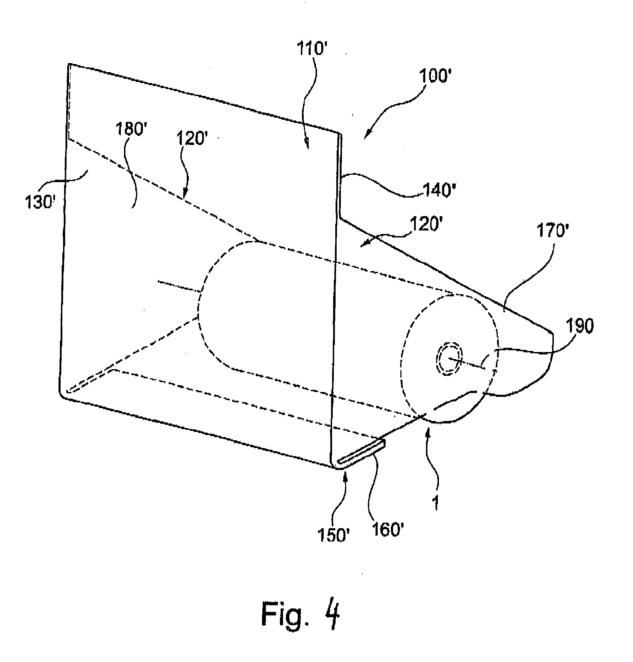

Figur 4 zeigt - in schematischer Darstellung - eine weitere mögliche Ausführungsform einer Drückeinrichtung 100'. Die Drückeinrichtung 100' weist ein Drückteil 110' zum Übertragen der Druckkraft auf wenigstens eine Ware auf. Das Drückteil 110' hat eine Vorderseite 130' und eine Rückseite 140' ist mit der Vorderseite 130' gegen die Ware in Wirkkontakt bringbar.

Die Drückeinrichtung 100 weist ferner ein Gleitteil 150' auf, welches gegen einen (in der Figur 4 nicht dargestellten) Fachboden eines Rutschregales gleitend in Wirkstellung bringbar ist. Das Gleitteil 150' ist an dem Drückteil 110' angeordnet und erstreckt sich von dem Drückteil 110' in Richtung der Rückseite 140'.

An dem Drückteil 110' ist eine Aufnahme 120' angeordnet, an welcher ein Laufkörper in Art des Laufkörpers 1 gemäß der Figur 2 gelagert ist. Der Laufkörper 1 kann drehbar um eine Achse 190 oder drehfest in der Aufnahme 120' gelagert sein. Auch kann daran ein Laufkörper 1' gemäß der Figur 3 gelagert sein.

Bevorzugt sind das Gleitteil 150' und die Aufnahme 120' durch Umformen, insbesondere Biegeumformen, von Materialabschnitten 160', 170' und 180' des Drückteiles 110' gebildet. Die Materialabschnitte 170' und 180', welche die Aufnahme 120' für den Laufkörper 1 bilden, wie auch der das Gleitteil 150' bildende Materialabschnitt 160 liegen von der Vorderseite 130` des Drückteiles 110' abgewandt, so dass die Vorderseite 130' im Wesentlichen vollständig, insbesondere flächig, gegen die Ware in Wirkkontakt gebracht werden kann, ohne dass dabei das Gleitteil 150' wie auch die Aufnahme 120' störend im Wege steht.

### Bezugszeichenliste

- 1: Laufkörper
- 1': Laufkörper
- 2: Lauffläche
- 3: Gusskörper
- 3': Gusskörper
- 4: Materialabschnitt
- 5: Materialabschnitt
- 6: Drehachse
- 7: Schicht

- 100: Drückeinrichtung
- 100': Drückeinrichtung
- 110: Drückteil
- 110': Drückteil
- 120: Trägerelement
- 130': Vorderseite
- 140': Rückseite
- 150': Gleitteil
- 160': Materialabschnitt
- 170': Materialabschnitt
- 180': Materialabschnitt
- 190: Achse

- 500: Rutschregal
- 510: Fachboden
- 520: Fachteiler
- 530: Fachteiler

- 600: Waren

## Patentansprüche

1. Laufkörper (1; 1') für eine auf Waren wirkende Drückeinrichtung (100) eines Rutschregales (500) mit einer vorzugsweise gegen einen Fachboden (510) des Rutschregales (500) in Wirkstellung bringbaren Lauffläche (2), welche an der Mantelfläche eines Gusseisen enthaltenden oder aus Gusseisen bestehenden Gusskörpers (3; 3') angeordnet ist.

2. Laufkörper nach Anspruch 1, **dadurch gekennzeichnet, dass** der Gusskörper (3; 3') aus Grauguss besteht oder Grauguss enthält.

3. Laufkörper nach Anspruch 1 oder 2, **dadurch gekennzeichnet, dass** der Gusskörper (3') eine Beschichtung aufweist, welche die Lauffläche (2) bildet.

4. Laufkörper nach einem der vorhergehenden Ansprüche,
**dadurch gekennzeichnet, dass** der Gusskörper (3') mit einer Lackierung versehen ist, welche die Lauffläche (2) bildet.

5. Laufkörper nach einem der vorhergehenden Ansprüche,
**dadurch gekennzeichnet, dass** der Gusskörper (3') mit einer Imprägnierung, insbesondere mit einer wenigstens ein Polymer aufweisenden Imprägnierung, versehen ist, welche die Lauffläche (2) bildet.

6. Laufkörper nach Anspruch 1 oder 2, **dadurch gekennzeichnet, dass** die Lauffläche (2) an der Mantelfläche des Gusskörpers (3) ausgebildet ist.

7. Laufkörper nach einem der vorhergehenden Ansprüche,
**dadurch gekennzeichnet, dass** der Laufkörper (1; 1') zwei der Lagerung des Laufkörpers (1; 1') dienende Materialabschnitte (4, 5) aufweist, welche koaxial bezüglich einer Mittelachse und/oder Drehachse (6) des Laufkörpers (1; 1') angeordnet sind, wobei wenigstens einer der Materialabschnitte (4, 5) an dem Gusskörper (3; 3') angebunden, insbesondere angeformt ist.

8. Laufkörper nach einem der vorhergehenden Ansprüche,
**dadurch gekennzeichnet, dass** der Gusskörper (3; 3') als Vollkörper ausgebildet ist.

9. Laufkörper nach einem der vorhergehenden Ansprüche,
**dadurch gekennzeichnet, dass** der Gusskörper (3; 3') im Wesentlichen zylinderförmig ausgebildet ist.

10. Gießform zur Herstellung des Gusskörpers (3) eines Laufkörpers (1; 1') nach einem der vorhergehenden Ansprüche mittels Gießverfahren.

11. Drückeinrichtung (100; 100') für ein Rutschregal (500), welche zum Aufbringen einer Druckkraft auf Waren (600) des Rutschregales (500) dient, mit wenigstens einem Laufkörper (1; 1') nach einem der Ansprüche 1 bis 9.

12. Drückeinrichtung (100') für ein Rutschregal, welche zum Aufbringen einer Druckkraft auf Waren des Rutschregales dient, mit einem Drückteil (110') zum Übertragen der Druckkraft auf wenigstens eine Ware, wobei das Drückteil (110') eine Vorderseite (130') und eine Rückseite (140') aufweist und mit der Vorderseite (130') gegen die Ware in Wirkkontakt bringbar ist, und mit einem gegen einen Fachboden eines Rutschregales gleitend in Wirkstellung bringbaren Gleitteil (150'), wobei das Gleitteil (150') an dem Drückteil (110') angeordnet ist und sich von dem Drückteil (110') in Richtung der Rückseite (140') erstreckt.

13. Drückeinrichtung nach Anspruch 12, **dadurch gekennzeichnet, dass** das Gleitteil (150') durch Umformen, insbesondere durch Biegen eines Materialabschnittes (160') des Drückteils (110') gebildet ist.

14. Drückeinrichtung nach Anspruch 12 oder 13, **dadurch gekennzeichnet, dass** an dem Drückteil (110') eine Aufnahme (120') angeordnet ist, an welcher wenigstens ein Gleit- und/oder Rollelement, beispielsweise in Art eines Laufkörpers (1; 1') nach einem der Ansprüche 1 bis 9, drehbar oder drehfest gelagert ist.

15. Rutschregal (500) mit wenigstens einer Drückeinrichtung (100; 100') nach einem der Ansprüche 12 bis 14.
